# EUROPEAN PATENT APPLICATION

(11) **EP 2 854 392 A1**
(43) Date of publication of application: **01.04.2015**
(21) Application number: 13186779.8
(22) Date of filing: 30.09.2013
(51) Int. Cl.: H04N 5/66, H04N 5/64, F21V 8/00, H04N 9/73

(54) **Lighting system for a display unit and method for providing lighting functionality for a display unit**

(71) Applicant: Advanced Digital Broadcast S.A., 1292 Chambesy (CH)
(72) Inventor: Micewicz, Jaroslaw, 65-119 Zielona Gora (PL); Fediow, Krzysztof, 65-119 Zielona Gora (PL)
(74) Representative: Pawlowski, Adam

(57) **Abstract**

A lighting system for a display unit, characterized in that the lighting system comprises: a lighting tape (110) comprising a plurality of light sources (111) for being attached to a display unit (100) in a specified configuration, wherein the lighting sources (111) are configured to illuminate in response to a lighting control signal (131), and a lighting tape driver (121) configured to generate the lighting control signal (131) depending on the configuration of the lighting tape (110) and the contents of a video signal (132) to be displayed on display unit (100).

## Description

The present invention relates to lighting systems and methods for enhancing the functionality of display units.

There are known display units that are provided with a lighting system that lights up against the background at the rear side of the unit. Such ambient lighting increases the comfort of watching TV as it equals the light relation between the display unit and the surroundings.

An effect is created like the screen is floating in front of the wall. Such lighting system is disclosed for example in a European patent EP1379082. It comprises a display unit for displaying a picture, at least one illumination unit for providing a background light and means for controlling colour of the background light in response to an average colour of the picture at a side where the background light is present.

The known systems have the illumination unit integrated with the display unit. It would be advantageous to propose a lighting system that can be adapted to standard display units.

The object of the invention is a lighting system for a display unit, the lighting system comprising: a lighting tape comprising a plurality of light sources for being attached to a display unit in a specified configuration, wherein the lighting sources are configured to illuminate in response to a lighting control signal, a lighting tape driver configured to generate the lighting control signal depending on the configuration of the lighting tape and the contents of a video signal to be displayed on display unit.

Preferably, the configuration of the lighting tape comprises data on tape segments, position of the segments with respect to the geometry of the screen of the display unit and identification of light sources in each segment.

Preferably, the lighting tape driver comprises a setup interface configured to receive the configuration of the lighting tape and a memory configured to store the configuration of the lighting tape.

Preferably, the lighting tape driver is a software element of a video source device.

Preferably, the control signal is transmitted via the same digital signal interface as the video signal.

Preferably, the control signal is transmitted via a different signal interface than the video signal.

Preferably, the control signal specifies the intensity and/or colour of the illumination to be produced by the light sources.

Preferably, the control signal is generated as a function of a selected layer of the video signal to be displayed.

Preferably, the control signal is generated as a function of audio signal transmitted to the display unit.

Preferably, a predefined control signal is generated when no video signal is to be displayed on the display unit.

Preferably, a predefined control signal is generated upon receiving an event trigger.

Another object of the present invention is a method for providing a lighting system functionality for a display unit, comprising: providing a lighting tape comprising a plurality of light sources for being attached to a display unit in a specified configuration, wherein the lighting sources are configured to illuminate in response to a lighting control signal, providing a lighting tape driver configured to generate the lighting control signal depending on the configuration of the lighting tape and the contents of a video signal to be displayed on display unit.

The object of the invention is shown by means of exemplary embodiment on a drawing, in which:
Fig. 1 shows an embodiment of the lighting system,
Fig. 2 shows an exemplary configuration of a lighting tape;
Fig. 3 shows the structure of a lighting tape driver.

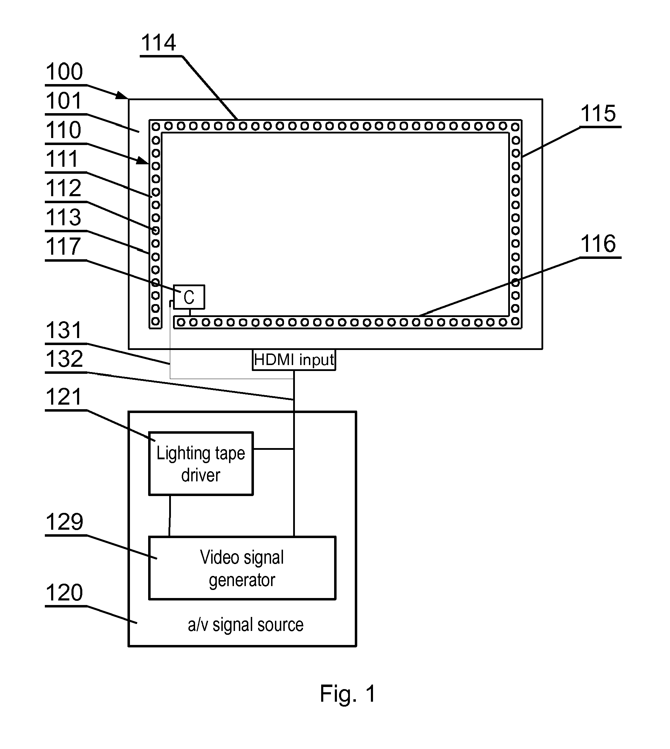

Fig. 1 shows an exemplary embodiment of the lighting system according to the invention. It comprises a lighting tape 110 which is attached to a display unit 100, preferably at the rear wall 101 of the display unit. In use, the tape 110 is located between the display unit 100 and the wall on which the display unit 100 is mounted.

The tape 110 comprises a support 111, which is preferably made of a flexible material self-adhesive at one side such that it can be easily adhered to the display unit. On the support 111 there are mounted a plurality of light sources 112, preferably light emitting diodes (LEDs). The lighting tape 110 can be attached to the display unit 100 in a configuration selected by the user. In order to achieve best ambient lighting effect, it should be attached at the boundary of the unit.

The configuration of the lighting tape 110, i.e. the description of the position in which is attached to the display unit 100, can be described by specifying individual tape segments 113-116, their position with respect to the geometry of the screen of the display unit 100 and identification of lighting sources 112 within the segment.

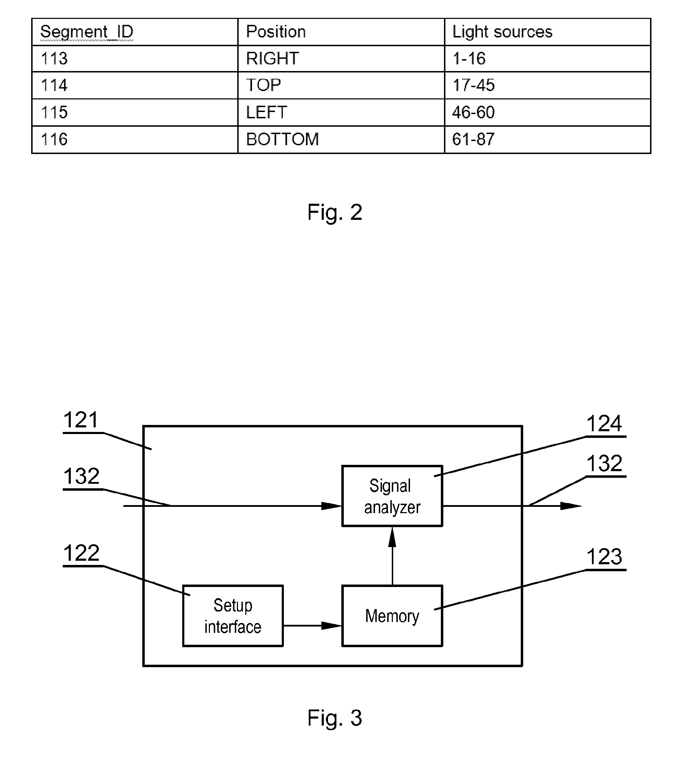

Fig. 2 shows an exemplary table defining the configuration of the lighting tape 110 of Fig. 1. The tape 110 comprises 87 LEDs. Segment 113 is attached to the right side of the screen (Fig. 1 shows the screen viewed from the back) and comprises first 16 LEDs. Segment 114 is attached to the top side of the screen and comprises the next 29 LEDs, segment 115 is attached to the left side of the screen and comprises 15 LEDs and segment 116 is attached to the bottom side of the screen and comprises the last 27 LEDs.

The light sources 112 are controlled by a lighting control signal 131, which determines at least the time at which each light source 112 shall illuminate, and possibly the intensity and/or colour of illumination. The lighting control signal 131 may be processed by a controller 117 configured to convert the lighting control signal 131 to specific signal protocol necessary to properly power the lighting sources 112.

The lighting control signal 131 is generated by the same a/v signal source 120 which generates the video signal 132 to be displayed on the display unit. The a/v signal source 120 may be a stand-alone unit, such as a television set-top box, a DVD player, a personal computer etc.

The a/v signal source 120 has a lighting tape driver 121 which receives the video signal 132 to be displayed on the display unit, analyzes that signal and generates the lighting control signal 131 depending on the contents of the video signal 132. The lighting tape driver 121 can be implemented as a stand-alone circuit or can be integrated as a component of the video signal generator 129. Preferably, it is a software component integrated within the video signal generator 129, to generate additional data to be present at the output of the a/v signal source.

The lighting tape driver 121 may have a structure as shown in Fig. 3. It may comprise a setup interface 122, via which the user of the lighting system may input the configuration of the lighting tape that is installed at the display unit. The system may be provided to a user with a lighting tape having a relatively large length, suitable for being attached at the boundary of large display screens.

If the display screen of the user has a boundary shorter than the length of the lighting tape, the user may just cut the unnecessary portion of the tape (if the electrical connections of the lighting sources allow this) or position the unused portion of the tape in the middle portion of the screen. Next, the user may calculate the number of light sources in each segment. For example, the user may attach a long lighting tape at the back of the display as shown in Fig. 1, enter the number of LEDs as shown in Fig. 2 and then all LEDs having number 88 and above are declared as unused and are not to be driven by the lighting tape driver 121. The configuration is stored in memory 123.

The lighting control signal 131 is generated by a signal analyzer 124 depending on the configuration of the lighting tape 110 and the contents of a video signal 132 to be displayed on display unit 100. It can be generated in a manner equivalent to that known in the art from lighting systems for video display units such as disclosed in EP1379082. For example, if the system is configured as shown in Fig. 2, then when the signal analyzer 124 determines that the left side of the display unit should be illuminated with green colour, it configures the control signal 131 to indicate green illumination for LEDs 46-60.

The lighting control signal 131 can be transmitted via the same interface as the video signal 132. For example, the lighting control signal 131 can be transmitted via I2C interface of a HDMI interface or via DVI interface Alternatively, the lighting control signal 131 can be transmitted via another interface, for example USB interface.

Preferably, the lighting tape driver 121 is a software component which can be installed as a software add-on within the a/v signal source 120 and configured to generate the lighting control signal 131 at a particular output of the a/v signal source 120, to which the lighting tape 110 is connectable. Such software component may cooperate with signal generating software components of the a/v signal source.

The lighting tape driver 121 may collect various information from the a/v signal source 120 and configure its operation accordingly.

For example, the lighting tape driver 121 may extract from the video signal generator 129 the parameters of various layers of the video signal displayed. If, for example, the displayed video signal comprises a video layer and an OSD layer (e.g. an EPG screen or a channel banner), the lighting tape may be configured to illuminate accordingly to the video signal only and not the OSD layer - this may be advantageous when the OSD layer is adjacent to the borders of the screen and could disrupt the desired illumination effects.

In addition, the lighting tape driver can extract from the a/v signal source 120 information on audio signal and adapt the illumination responsively to the audio signal changes - this could generate stroboscope-like lighting for disco-like effects.

Furthermore, the user could setup predefined illumination schemes, such as illumination with a specific color, specific set of colors (such as a rainbow), illumination changing color with time, such that the display unit might function as a decorative unit even when no video signal is displayed.

Furthermore, the lighting tape driver 121 may collect event triggers from other components of the a/v signal source. For example, the a/v signal source may have an alarm signal generator for generating an alarm upon receiving an alarm event in the video signal (such as EAS signal in the USA) or receiving an alarm event from an external sensor, such as anti-theft, gas, fire or other sensor. Other components of the a/v signal source 120 that could generate events or triggers are communication applications (e.g. incoming e-mail event, incoming telephone call event, unanswered telephone call), automatic clocks (wake-up event, goodnight event).

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. A skilled person will recognize that alternate embodiments of the invention are possible as well. For example, the lighting tape driver 121 may be configured to drive a plurality of lighting tapes, such as tapes configured to be installed at different parts of the display unit (e.g. 4 tapes, each for one side of the display unit) or tapes comprising different light sources (e.g. of different colours).

The presented preferred embodiments are exemplary only, and are not exhaustive of the scope of the technical concept presented herein. Accordingly, the scope of protection is not limited to the preferred embodiments described in the specification, but is only limited by the claims that follow.

In addition, any combination of the appended claims in envisaged in the present application.

## Claims

1. A lighting system for a display unit, **characterized in that** the lighting system comprises:
- a lighting tape (110) comprising a plurality of light sources (111) for being attached to a display unit (100) in a specified configuration, wherein the lighting sources (111) are configured to illuminate in response to a lighting control signal (131), and
- a lighting tape driver (121) configured to generate the lighting control signal (131) depending on the configuration of the lighting tape (110) and the contents of a video signal (132) to be displayed on display unit (100).

2. The lighting system according to claim 1, wherein the configuration of the lighting tape comprises data on tape segments (113-116), position of the segments (113-116) with respect to the geometry of the screen of the display unit and identification of light sources (112) in each segment.

3. The lighting system according to any of previous claims, wherein the lighting tape driver (121) comprises a setup interface (122) configured to receive the configuration of the lighting tape (110) and a memory (123) configured to store the configuration of the lighting tape.

4. The lighting system according to any of previous, wherein the lighting tape driver (121) is a software element of a video source device (120).

5. The lighting system according to any of previous claims, wherein the control signal (131) is transmitted via the same digital signal interface as the video signal (132).

6. The lighting system according to any of previous claims, wherein the control signal (131) is transmitted via a different signal interface than the video signal (132).

7. The lighting system according to any of previous claims, wherein the control signal (131) specifies the intensity and/or colour of the illumination to be produced by the light sources (112).

8. The lighting system according to any of previous claims, wherein the control signal (131) is generated as a function of a selected layer of the video signal to be displayed.

9. The lighting system according to any of previous claims, wherein the control signal (131) is generated as a function of audio signal transmitted to the display unit (120).

10. The lighting system according to any of previous claims, wherein a predefined control signal (131) is generated when no video signal (132) is to be displayed on the display unit.

11. The lighting system according to any of previous claims, wherein a predefined control signal (131) is generated upon receiving an event trigger.

12. A method for providing a lighting system functionality for a display unit, **characterized by**:
- providing a lighting tape (110) comprising a plurality of light sources (111) for being attached to a display unit (100) in a specified configuration, wherein the lighting sources (111) are configured to illuminate in response to a lighting control signal (131),
- providing a lighting tape driver (121) configured to generate the lighting control signal (131) depending on the configuration of the lighting tape (110) and the contents of a video signal (132) to be displayed on display unit (100).
